**Europäisches Patentamt**

**European Patent Office**

**Office européen des brevets**

(19)

(11) Veröffentlichungsnummer: **0 461 102 A2**

(12) ## EUROPÄISCHE PATENTANMELDUNG

(21) Anmeldenummer: **91890115.8**

(22) Anmeldetag: **28.05.91**

(51) Int. Cl.$^5$: **G01K 7/18**

(30) Priorität: **05.06.90 AT 1215/90**

(43) Veröffentlichungstag der Anmeldung:
**11.12.91 Patentblatt 91/50**

(84) Benannte Vertragsstaaten:
**AT CH DE FR IT LI SE**

(71) Anmelder: **Austria Email-EHT Aktiengesellschaft**
**Breitenseer Strasse 76-80**
**A-1140 Wien (AT)**

(72) Erfinder: **Pennerstorfer, Walter, Dipl.-Ing.**
**Dornbacherstrasse 93**
**A-1170 Wien (AT)**
Erfinder: **Tafner, Friedrich**
**Schubertstrasse 26**
**A-8720 Knittelfeld (AT)**

(74) Vertreter: **Köhler-Pavlik, Johann, Dipl.-Ing.**
**Margaretenplatz 5**
**A-1050 Wien (AT)**

(54) **Temperaturempfindlicher Sensor.**

(57)    Meßfühler zur Erfassung der Temperatur, des Wärmeinhaltes und ähnlichen Größen, beispielsweise für Warmwasserbereiter, Nacht- oder Pufferspeicher, umfassend einen Widerstandsdraht und ein angeschlossenes Spannungsmeßsystem, wobei der Widerstandsdraht 2 in zumindest zwei, vorzugsweise mehreren, Schleifen bzw. Wicklungen auf einer Trägerfolie 1 angebracht ist. Vorteilhafterweise ist (sind) zumindest ein, vorzugsweise zwei, Befestigungselement(e) 4 für die Schleifen bzw. Wicklungen des Widerstandsdrahtes 2 vorgesehen.
    Durch Zusatzbauteile, wie ein Trimmpotentiometer 5 oder eine Spannungsteiler-Schaltung unter Verwendung eines Temperatursensors 6 können fertigungstechnische Toleranzen ausgeglichen werden.
    Die Erfindung betrifft auch die Herstellung des Meßfühlers.

EP 0 461 102 A2

Fig.1

Die Erfindung betrifft einen Meßfühler zur Erfassung der Temperatur, des Wärmeinhaltes und ähnlicher Größen, beispielsweise für Warmwasserbereiter, Nacht- oder Pufferspeicher, umfassend einen Widerstandsdraht und ein angeschlossenes Spannungsmeßsystem.

Meßfühler auf Widerstandsbasis, bei welchen die temperaturabhängige Veränderung des elektrischen Widerstandes über ein entsprechendes Meßgerät angezeigt wird, sind zur Erfassung der Temperatur, aber auch des Wärmeinhaltes einer bestimmten Menge eines Mediums, schon längere Zeit bekannt. Das Ausgangsmaterial für derartige Meßfühler sind industriell gefertigte Widerstandsdrähte. Diese sind in einigen festgelegten Legierungen und in bestimmten diskreten Querschnittsabstufungen erhältlich. Der Widerstand, und damit auch der angezeigte Wert, ist von der Drahtlänge, dem Drahtquerschnitt und der verwendeten Legierung abhängig, wodurch sich in vielen Anwendungsfällen Einschränkungen, beispielsweise in Bezug auf die Baugröße des Fühlers und des Gerätes, den Wertebereich des Widerstandes, etc. ergeben. Andererseits bedingen jedoch Fertigungstoleranzen Meßwertabweichungen bis zu 10 % nach oben als auch nach unten vom theoretischen Widerstandswert. Beide Tatsachen erschweren die Konstruktion eines Fühlers mit hoher Genauigkeit und Auflösung, d.h. eines Fühlers, bei welchem geringe Temperaturänderungen ausreichend große Widerstandsänderungen, z.B. für die Weiterverarbeitung in elektronischen Schaltungen, ergeben.

Um die Drahtlänge zur Erhöhung der Widerstandsänderungen zu vergrößern, wurde eine mäanderförmige Anordnung des Widerstandsdrähtchens vorgeschlagen. So ist beispielsweise in der DE-OS 2 261 531 ein Temperaturwiderstandsfühler beschrieben, bei welchem sich der Widerstandsdraht nahe einer Längskante des Trägermaterials gerade erstreckt und in mäanderformigen Bahnen wieder zurückgeführt wird. In der DE-OS 2 048 489 ist ebenfalls ein Temperaturflächenfühler beschrieben, bei welchem die geraden Abschnitte des ebenfalls mäanderförmig angebrachten Widerstandsdrahtes parallel zur Längsrichtung des Fühlers ausgerichtet sind. Bei beiden Fühlern sind ebene, starre Grundallenfalls Deckplättchen vorgesehen, sodaß sich diese Fühler nur zu punktuellen Messungen an ebenen Oberflächen eignen. Überdies erfordert die mäanderförmige Aufbringung des Widerstandsdrähtchens eine maschinell aufwendige und zeitintensive Fertigung.

Dies gilt noch in viel größerem Ausmaß für den Temperatursensor, welcher in der Zeitschrift "electronic" Heft 14, 1986, auf den Seiten 85 bis 90, in einem Artikel von H. Henke vorgestellt wird. Hierbei handelt es sich um einen Siliziumchip mit einem aufgedampften und exakt abgeglichen Widerstandsnetzwerk, der eine Größe von 1 x 1,3mm aufweist. Dieser Fühler mit überaus aufwendiger Herstellung ist für Messungen, beispielsweise des Wärmeinhaltes eines großen behälters, nicht geeignet, sondern erlaubt nur die punktuelle Temperaturmessung.

Aufgabe der Erfindung war daher ein Meßfühler auf Widerstandsbasis mit erhöhter Genauigkeit und Auflösung, welcher einfach und rasch mit geringem Aufwand herstellbar ist. Der Meßfühler soll dabei gleichzeitig auch bei größeren Dimensionen der Oberfläche des jeweiligen Gerätes angepaßt sein.

Eine weitere Aufgabe bestand darin, die Fertigungstoleranzen der Ausgangsmaterialien des Meßfühlers auf einfache und rasche Weise noch im Zuge der Fertigung kompensieren zu können.

Schließlich sollte auch ein Verfahren zur einfachen Herstellung eines Meßfühlers mit erhöhter Genauigkeit und Auflösung angegeben werden.

Die Aufgabe wird bei dem eingangs beschriebenen Meßfühler dadurch gelöst, daß der Widerstandsdraht in zumindest zwei, vorzugsweise mehreren einander überschneidenden Schleifen bzw. Wicklungen auf einer flexiblen Trägerfolie angebracht ist.

Die Schleifenanordnung erlaubt es, auf gleicher Baulänge des Meßfühlers mehr Widerstandsdraht unterzubringen, wobei gleichzeitig der Aufwand für die Fertigung, sowohl händisch als auch maschinell, sehr gering bleibt. Anstatt den Widerstandsdraht in komplizierte mäanderförmige Bahnen zu bringen, muß beim erfindungsgemäßen Fühler der Draht lediglich in zwei einander entgegengesetzte Richtungen abgewickelt werden, währenddessen bei mäanderförmigen Widerstandsdraht die entsprechende Bahn abgefahren werden muß. Die größere Länge des Widerstandsdrahtes sorgt dabei für die erwünschte Erhöhung der absoluten Widerstandswerte als auch der Differenz der Widerstandswerte bei gegebener Temperaturdifferenz. Dadurch sind die, für eine feinstufige Meßwerterfassung und Weiterverarbeitung der Signale des Fühlers notwendigen Voraussetzungen gegeben. Die flexible Trägerfolie gestattet die Anpassung des erfindungsgemäßen Meßfühlers an alle beliebigen Oberflächenformen, auch bei relativ großen Dimensionen des Fühlers. Um den Wärmeinhalt eines Behälters zu messen, genügt es, den Meßfühler derart auszulegen, daß die Breite des Meßfühlers klein gegenüber seiner Längsdimension ist. Dies hat weiters den Vorteil, daß die Anpassung an die Oberfläche des Behälters im wesentlichen nur in einer Dimension, nämlich der Längsdimension des Längsfühlers, vorgenommen werden muß.

Die Aufgabe des Ausgleichs von Fertigungstoleranzen der Widerstandsdrähte wird gemäß einem weiteren Merkmal dadurch gelöst, daß im Verlauf des Widerstandsdrahtes ein Trimmpotentiometer vorgesehen ist. Obgleich hierdurch fertigungstechnische Toleranzen kompensiert werden können, weist diese Lösung den Nachteil auf, daß die Kompensierung nur in einem Arbeitspunkt genau gilt.

Daher ist nach einem weiteren Merkmal der Erfindung vorgesehen, daß der Widerstandsdraht mit einem Ende mit dem masseseitigen Anschluß eines Temperatursensors verbunden ist, der vorzugsweise ebenfalls auf der Trägerfolie angebracht ist, und daß am anderen Ende des Widerstandsdrahtes eine Spannungsteilerschaltung vorgesehen ist, wobei an einem Kontakt davon, vorzugsweise unter Zwischenschaltung eines Trimmpotentiometers, eine Versorgungsspannung angelegt und der andere Kontakt mit dem Spannungsmeßsystem verbunden ist.

Diese Kombination des Widerstandsdrahtes mit einem Sensor zum punktförmigen Erfassen der Temperatur erlaubt nunmehr die Kompensation von Fertigungstoleranzen über den gesamten Temperaturbereich. Die am Meßausgang des Widerstandsdrahtes abnehmbare Spannung variiert nicht nur in Abhängigkeit des Temperaturverlaufes entlang des Drahtes selbst, sondern aufgrund der Verbindung zum Temperaturfühler auch in Abhängigkeit von der dort gemessenen Temperatur, die auch mit einer Widerstandsänderung in diesem Teilabschnitt einhergeht.

Das erfindungsgemäße Verfahren zur Herstellung des Meßfühlers sieht vor, daß unter Berücksichtigung des Querschnittes und Materials des Widerstandsdrahtes die zur Erlangung des gewünschten Ausgangssignales erforderliche Anzahl von Wicklungen bzw. Schleifen sowie deren Länge bestimmt und maschinell oder händisch angefertigt und der Draht zumindest teilweise auf eine Trägerfolie aufgebracht, vorzugsweise aufgeklebt, wird, und anschließend die fertigungstechnischen Toleranzen des Drahtes durch Abgleichen der Drahtlänge unabhängig von den Abmessungen des Meßfühlers selbst ausgeglichen werden.

Vorteilhafte Varianten dieses Verfahrens bestehen gemäß der Erfindung darin, daß unter Berücksichtigung des Querschnittes und Materials des Widerstandsdrahtes die zur Erlangung des gewünschten Ausgangssignales erforderliche Anzahl von Wicklungen bzw. Schleifen sowie deren Länge bestimmt und maschinell oder händisch angefertigt und der Draht zumindest teilweise auf eine Trägerfolie aufgebracht, vorzugsweise aufgeklebt wird, und anschließend die fertigungstechnischen Toleranzen des Drahtes durch Anschließen und Einstellen eines Trimmpotentiometers oder einer Spannungsteilerschaltung ausgeglichen sowie die Zusatzbauteile auf die Trägerfolie aufgebracht, vorzugsweise aufgeklebt, werden.

Eine besondere Vereinfachung der Herstellung des erfindungsgemäßen Meßfühlers kann dadurch erzielt werden, daß die Wicklungen bzw. Schleifen des Widerstandsdrahtes um zumindest ein, vorzugsweise zwei, die Trägerfolie allenfalls durchstoßende temporäre Befestigungselemente angelegt werden. Die Befestigungselemente sind in diesem Fall nur während der Herstellung des Meßfühlers vorhanden und werden nach Aufbringen des Drahtes auf die Trägerfolie und der Befestigung darauf wieder entfernt. Vorzugsweise sind diese Befestigungselemente Dornen, Polzen oder ähnliches der Herstellungsmaschine, in welche die Trägerfolie eingelegt wird.

Weitere Merkmale und Vorteile der Erfindung werden in der nachfolgenden Beschreibung unter Bezugnahme auf die Zeichnungen erläutert.

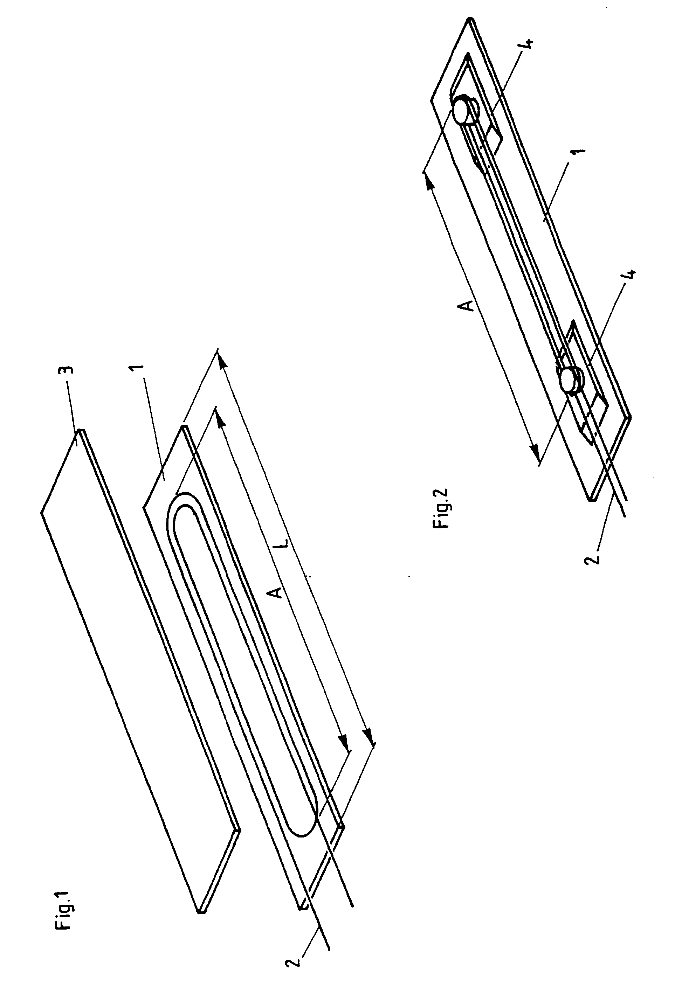

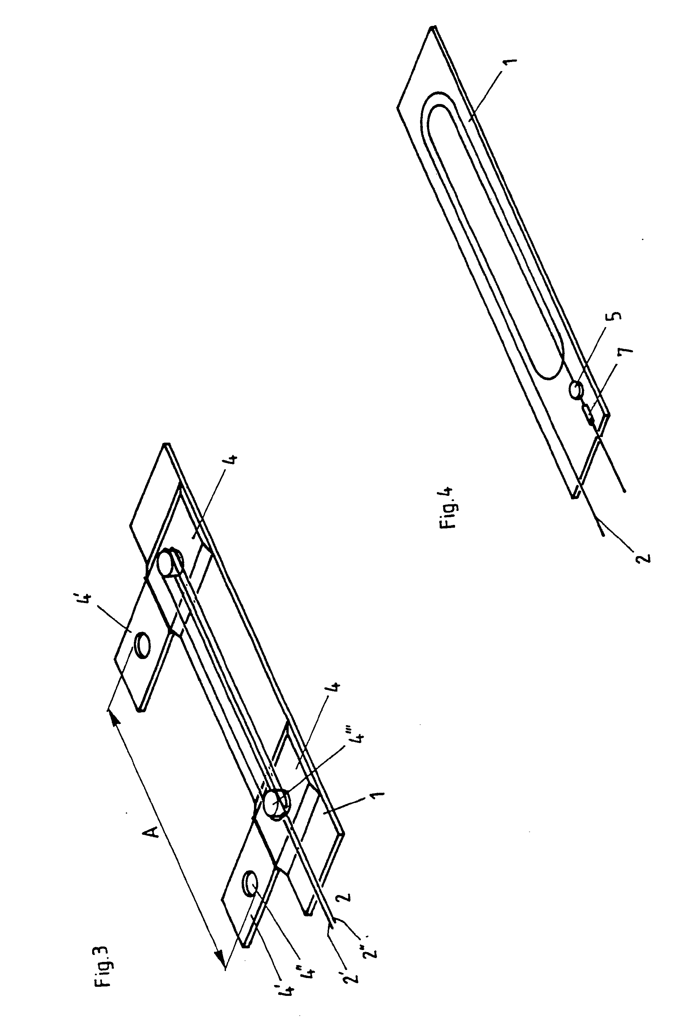

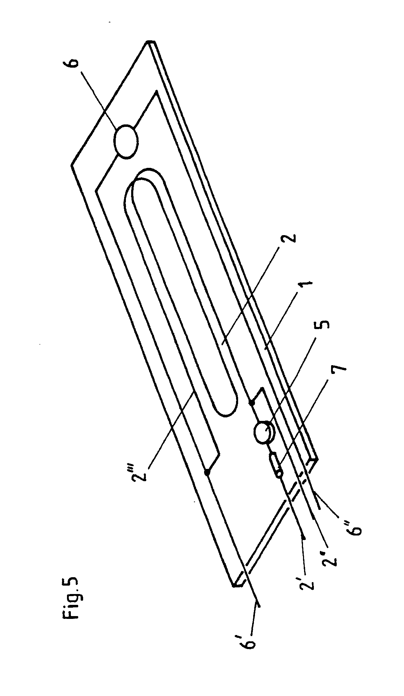

Fig. 1 zeigt den grundsätzlichen Aufbau des erfindungsgemäßen Meßfühlers, Fig. 2 und 3 stellen Ausführungsbeispiele mit Befestigungselementen dar, Fig. 4 zeigt eine vorteilhafte Variante des Meßfühlers mit Korrekturmöglichkeit und Fig. 5 einen Meßfühler mit kompensierender Spannungsteilerschaltung.

Der einfachste Aufbau des Meßfühlers gemäß der Erfindung ist in Fig. 1 dargestellt. 1 bezeichnet eine flexible Trägerfolie, welche vorzugsweise als doppelseitiges Klebeband ausgeführt ist. Dadurch können einerseits der Widerstandsdraht sowie weitere Bauteile rasch und einfach auf der Trägerfolie 1 befestigt werden und andererseits der fertig aufgebaute und einsatzbereite Fühler ebenso einfach und rasch am jeweiligen Gerät oder Einsatzort montiert werden. Der Widerstandsdraht 2 ist auf der besagten Trägerfolie 1 in zumindest zwei Wicklungen bzw. Schleifen angebracht. Wie in den Figuren dargestellt, überschneiden die einzelnen Wicklungen einander. Vorzugsweise sind mehrere Wicklungen bzw. Schleifen vorgesehen, um die für eine feinstufige Meßwerterfassung erforderliche Widerstandsänderung pro Temperaturintervall zu erhalten. Vorteilhafterweise ist weiters eine Schutzfolie 3 vorgesehen, die den Widerstandsdraht 2 bzw. alle auf der Trägerfolie 1 angebrachten Bauteile abdeckt und damit mechanisch schützt. Die Schutz- bzw. Abdeckfolie 3 ist vorzugsweise mit der Trägerfolie 1 verklebt.

Zur Herstellung des beschriebenen Meßfühlers mit der Länge L wird vorerst die erforderliche Anzahl von Schleifen des Drahtes 2 sowie deren Länge A bestimmt. Dabei ist natürlich der Querschnitt und das Material des jeweils verwendeten oder zur Verfügung stehenden Drahtes zu berücksichtigen, um das gewünschte Ausgangssignal bzw. dessen gewünschten Spannungsbereich zu erhalten. Danach werden die Schleifen bzw. Wicklungen händisch oder maschinell angefertigt. Dies umfaßt im wesentlichen die Führung des Widerstandsdrahtes 2 in zwei einander entgegengesetzte Richtungen. Es ist leicht einzusehen, daß diese Bewegungen sowohl händisch als auch maschinell um vieles leichter auszuführen sind als die komplozierten mäanderartigen Bahnen der herkömmlichen Sensoren. Dies ist insbesondere daher von Bedeutung, da der Widerstandsdraht unter einer bestimmten Vorspannung aufgebracht werden soll, was nach dem erfindungsgemäßen Verfahren viel leichter und einfacher vorgenommen werden kann. Im nächsten Schritt werden die fertigungstechnischen Toleranzen des Drahtes 2 ausgeglichen, indem unabhängig von den Abmessungen, insbesondere der Länge L, des Meßfühlers die Drahtlänge abgeglichen wird. Bei einer bekannten vorbestimmten Temperatur wird die Drahtlänge solange variiert, bis der theoretisch erwartete Widerstandswert erreicht ist.

Dies kann durch Abänderung der Länge A einer, vorzugsweise der zuletzt angelegten, Wicklung erfolgen oder gegebenenfalls auch durch Anpassung aller Schleifen. Schließlich wird der Draht 2 auf der Trägerfolie angebracht, vorzugsweise mit letzterer verklebt. Im Falle der Abgleichung durch Veränderung nur der letzten Wicklung können die unverändert bleibenden Schleifen des Drahtes 2 auch schon vor dem Abgleichvorgang fix befestigt werden, sodaß danach lediglich die letzte Wicklung angebracht werden muß. Gegebenenfalls werden schließlich die auf der Trägerfolie 1 angebrachten Bauteile mittels der Schutzfolie 3 abgedeckt und diese vorzugsweise mit der Trägerfolie 1 verklebt.

Um die Abmessungen, insbesondere die Länge A, der Schleifen des Widerstandsdrahtes genau einhalten zu können, ist zumindest ein Befestigungselement vorgesehen. Vorzugsweise sind jedoch zwei im Abstand A voneinander angeordnete Befestigungselemente 4, vorzugsweise Kunststoffteile, vorgesehen, wie beispielhaft in Fig. 2 dargestellt ist. Die Schleifen bzw. Wicklungen des Drahtes 2 werden um diese Befestigungselemente 4 herum angelegt, wobei gemäß einer vorteilhaften Variante in der Herstellung der Abstand der Befestigungselemente während des Abgleichvorganges zur Anpassung der Drahtlänge verändert wird. Das kann, wie schon die Anordnung der Wicklungen selbst, maschinell oder auch händisch erfolgen. Sollten die besagten Befestigungselemente 4 fix, d.h. in ihrem gegenseitigen Abstand nicht veränderbar, auf der Trägerfolie 1 angebracht sein, oder durch integrale Teile der Folie 1 selbst gebildet sein, müssen andere, weiter unten beschriebene Kompensierungsmöglichkeiten vorgesehen sein. Auch bei einem einzigen Befestigungselement, beispielsweise in Form eines länglichen Grates der Länge A, dessen Abmessung nicht variabel ist, muß von der zuletzt angedeuteten Lösung Gebrauch gemacht werden.

Anderseits können die Befestigungselemente aber auch Teile der Herstellungsmaschine sein und sind dann am Meß fühler nur temporär vorhanden. Beispielsweise kann die Folie in die Maschine eingelegt werden, wonach zwei als temporäre Befestigungselemente dienende Dornen die Trägerfolie durchstechen. Um diese Dornen werden die Wicklungen des Drahtes 2 angelegt und diese dann an der Folie 1 befestigt. Nach der Befestigung können die Dornen wieder zurückgezogen werden, wonach der Meßfühler fertiggestellt werden kann.

Vorerst sei noch unter Bezugnahme auf Fig. 3 eine vorteilhafte Ausführungsform der Befestigungselemente 4 erläutert. Hierbei sind sie mit schwenkbaren Klappen 4' ausgestattet, die um 180° geschwenkt werden können. Nach Anbringung der Wicklungen des Widerstandsdrahtes 2 werden die Klappen 4' auf die Trägerfolie 1 hin verschwenkt, rasten in zusammengeklappter Stellung mit einer Öffnung oder Ausnehmung 4" in die auf der gleichen Seite wie der Draht 2 liegenden Erhöhungen 4'" der Befestigungselemente 4 ein und fixieren dadurch den Widerstandsdraht 2. Wenn die Klappen 4' entsprechenden Ausnehmungen einer (nicht dargestellten) Montagevorrichtung zugeordnet werden, kann das Abstandsmaß A, d.h. die Länge der Wicklungen, auf einfache und sichere Art reproduziert werden. Auch die automatische Abstandsanpassung zum Abgleichen der Drahtlänge wird dadurch vereinfacht, beispielsweise kann ein automatischer Meß- und Regelkreis den Test- und den anschließenden Anpassungsschritt (durch Abgleichen der Drahtlänge) steuern.

Bei allen der bislang beschriebenen Varianten des erfindungsgemäßen Meßfühlers kann, bei allen Varianten mit unveränderlichem Abstandsmaß A muß, die in Fig. 4 oder Fig. 5 gezeigte Ausführungsform zu einer allenfalls gewünschten Kompensierung der fertigungstechnischen Toleranzen des Widerstandsdrahtes herangezogen werden.

In Fig. 4 ist der Fühler wieder in der einfachsten Ausführung dargestellt, wobei im Verlauf des Widerstandsdrahtes 2 gemäß einem weiteren Merkmal der Erfindung ein Trimmpotentiometer 5, gegebenenfalls mit einem in Serie geschalteten Fixwiderstand 7, vorgesehen ist. Dieses Potentiometer wird nach Herstellung der Drahtwicklungen angeschlossen und entsprechend dem gewünschten Widerstands- bzw. Spannungswert eingestellt.

Wie eingangs der Beschreibung erwähnt wurde, sind mit einer solchen Anordnung nur Fehler in einem Arbeitspunkt, d.h. bei einem Temperaturwert, kompensierbar. Bei größer werdender Abweichung von diesem Arbeitspunkt wird auch der Fehler wieder größer, sodaß vorzugsweise Meßfühler mit einer Spannungsteilerschaltung gemäß Fig. 5 Verwendung finden. Vorzugsweise auf derselben Trägerfolie 1 wie der Draht 2 ist ein Temperatursensor 6 angebracht, der einen in Abhängigkeit von der an dessen Anbringungsstelle vorherrschenden Temperatur variierenden Widerstand aufweist. Der Ausgang 6' des Sensors 6 liegt an Masse und der Ausgang 6" ist an ein Auswertesystem für die Temperatur-Meßwerterfassung angeschlossen. Ein Ende 2'" des Widerstandsdrahtes 2 ist nun mit dem masseseitigen Anschluß 6' des Sensors 6 verbunden. Am anderen Ende des Drahtes 2 ist eine Spannungsteilerschaltung vorgesehen, wobei an einem Anschluß 2' die Versorgungsspannung angelegt wird, vorzugsweise unter Zwischenschaltung eines Trimmpotentiometers 5 und allenfalls eines Fixwiderstandes 7. In bezug auf die Versorgungsspannungsquelle in unmittelbarer Nähe hinter dem Potentiometer 5 wird die zu messende und dem zu erfassenden Wert proportionale Spannung abgenommen und über den Anschluß 2" dem Auswerte- und bzw. oder Anzeigesystem zugeführt. Mittels dieses Spannungsteilers wird hier erreicht, daß über den gesamten Arbeitsbereich des erfindungsgemäßen Meßfühlers eine Kompensation der Fertigungstoleranzen möglich ist.

**Patentansprüche**

1. Meßfühler zur Erfassung der Temperatur, des Wärmeinhaltes und ähnlichen Größen, beispielsweise für Warmwasserbereiter, Nacht- oder Pufferspeicher, umfassend einen Widerstandsdraht und ein angeschlossenes Spannungsmeßsystem, dadurch gekennzeichnet, daß der Widerstandsdraht (2) in zumindest zwei, vorzugsweise mehreren, einander überschneidenden Schleifen bzw. Wicklungen auf einer flexiblen Trägerfolie (1) angebracht ist.

2. Meßfühler nach Anspruch 1, dadurch gekennzeichnet, daß zumindest ein, vorzugsweise zwei, Befestigungselement(e) (4) für die Schleifen bzw. Wicklungen des Widerstandsdrahtes (2) vorgesehen ist bzw. sind.

3. Meß fühler nach Anspruch 2, dadurch gekennzeichnet, daß die Befestigungselemente (4) mit schwenkbaren Klappen (4') ausgestattet sind, welche in zusammengeklappter Stellung in auf der gleichen Seite wie der Widerstandsdraht (2) liegende Erhöhungen (4''') der Befestigungselemente (4) einrasten.

4. Meß fühler nach Anspruch 1, dadurch gekennzeichnet, daß im Verlauf des Widerstandsdrahtes (2) ein Trimmpotentiometer (5) vorgesehen ist.

5. Meß fühler nach Anspruch 1, dadurch gekennzeichnet, daß der Widerstandsdraht (2) mit einem Ende (2''') mit dem masseseitigen Anschluß (6') eines Temperatursensors (6) verbunden ist, der vorzugsweise ebenfalls auf der Trägerfolie (1) angebracht ist, und daß am anderen Ende des Widerstandsdrahtes (2) eine Spannungsteilerschaltung vorgesehen ist, wobei am einen Kontakt (2') davon, vorzugsweise unter Zwischenschaltung eines Trimmpotentiometers (5), eine Versorgungsspannung anlegbar und der andere Kontakt (2") mit dem Spannungsmeßsystem verbunden ist.

6. Meß fühler nach zumindest einem der vorangehenden Ansprüche, dadurch gekennzeichnet, daß die auf der Trägerfolie (1) angebrachten Bauteile (2, 5, 7; 6; 4) von einer Schutzfolie (3), welche vorzugsweise mit der Trägerfolie (l) verklebt ist, abgedeckt sind.

7. Meß fühler nach Anspruch 1, dadurch gekennzeichnet, daß die Breite des Meßfühlers klein gegenüber seiner Längsdimension (L) ist.

8. Verfahren zur Herstellung eines Meßfühlers gemäß Anspruch 1, dadurch gekennzeichnet, daß unter Berücksichtigung des Querschnittes und Materials des Widerstandsdrahtes (2) die zur Erlangung des gewünschten Ausgangssignales erforderliche Anzahl von Wicklungen bzw. Schleifen sowie deren Länge (A) bestimmt und maschinell oder händisch angefertigt und der Draht zumindest teilweise auf einer Trägerfolie aufgebracht, vorzugsweise aufgeklebt wird, und anschließend die fertigungstechnischen Toleranzen des Drahtes durch Abgleichen der Drahtlänge unabhängig von den Abmessungen (L) des Meßfühlers selbst ausgeglichen werden.

9. Verfahren zur Herstellung eines Meßfühlers gemäß Anspruch 1, dadurch gekennzeichnet, daß unter Berücksichtigung des Querschnittes und Materials des Widerstandsdrahtes (2) die zur Erlangung des gewünschten Ausgangssignales erforderliche Anzahl von Wicklungen bzw. Schleifen sowie deren Länge (A) bestimmt und maschinell oder händisch angefertigt und der Draht zumindest teilweise auf einer Trägerfolie aufgebracht, vorzugsweise aufgeklebt wird, und anschließend die fertigungstechnischen Toleranzen des Drahtes durch Anschließen und Einstellen eines Trimmpotentiometers oder einer Spannungsteilerschaltung ausgeglichen werden und der Draht sowie die Zusatzbauteile auf einer Trägerfolie aufgebracht, vorzugsweise aufgeklebt, wird.

10. Verfahren nach Anspruch 8 oder 9, dadurch gekennzeichnet, daß die Wicklungen bzw. Schleifen des Widerstandsdrahts (2) um zumindest ein, vorzugsweise zwei, die Trägerfolie (l) allenfalls durchstoßende temporäre Befestigungselemente angelegt werden.

11. Verfahren nach Anspruch 8 oder 9, dadurch gekennzeichnet, daß die Wicklungen bzw. Schleifen des Widerstandsdrahtes (2) um zumindest ein, vorzugsweise zwei, auf der Trägerfolie anzubringende(s) Befestigungselement(e) angelegt werden.

12. Verfahren nach Anspruch 11, dadurch gekennzeichnet, daß der Abstand der Befestigungselemente im Verlauf der Herstellung des Meßfühlers verändert wird, um damit die Drahtlänge abzugleichen.

13. Verfahren nach einem der Ansprüche 8 bis 12, dadurch gekennzeichnet, daß die auf der Trägerfolie angebrachten Bauteile mittels einer Schutzfolie, welche vorzugsweise mit der Trägerfolie verklebt wird, abgedeckt werden.

Fig.1

Fig.2

Fig.3

Fig.4

EP 0 461 102 A2

Fig.5